# EUROPÄISCHE PATENTSCHRIFT

(11) **EP 0 759 321 B1**
(45) Veröffentlichungstag und Bekanntmachung des Hinweises auf die Patenterteilung: **23.10.2002**
(21) Anmeldenummer: 96110795.0
(22) Anmeldetag: 04.07.1996
(51) Int. Cl.: B01D 53/86

(54) **Verfahren zum Reinigen eines Schwefelverbindungen enthaltenden Abgases mittels Aktivkohle**
Process for cleaning an exhaust gas containing sulphur compounds using an active carbon
Procédé pour la purification d'un gaz d'échappement contenant des composants de soufre utilisant un charbon actif

(30) Priorität: 22.08.1995 DE 19530774
(43) Veröffentlichungstag der Anmeldung: 26.02.1997
(73) Patentinhaber: MG Technologies AG, 60325 Frankfurt am Main (DE)
(72) Erfinder: Rittinger, Günter, 63486 Bruchköbel (DE); Lahrem, Achim A., 63543 Neuberg (DE)
(74) Vertreter: Revesz, Veronika

(56) Entgegenhaltungen:
- DE-A- 2 320 537

## Beschreibung

Die Erfindung betrifft ein Verfahren zum Reinigen eines Abgases, das O₂, 0,1 bis 2 Vol.-% SO₂ und 0,02 bis 1 Vol.-% H₂S enthält.

Ein Verfahren zum Reinigen eines Abgases, das O₂ und 0,1 bis 2 Vol.-% SO₂ enthält, wobei man das Abgas bei Temperaturen von 10 bis 200 °C durch eine Schüttung aus körniger Aktivkohle mit einer spezifischen Oberfläche nach BET von 700 bis 1200 m²/g leitet und dabei zusammen mit Wasser auf der Aktivkohle Schwefelsäure erzeugt, wobei die H₂SO₄-Konzentration auf den Aktivkohlekörnern 50 bis 80 Gew.-% beträgt und die Schwefelsäure von der Aktivkohle abfließt, ist aus DE-A-2320537 bekannt. Hierbei leitet man ein SO₂ und Wasserdampf enthaltendes Abgas durch ein aus körniger Aktivkohle bestehendes Bett. Vorzugsweise verwendet man eine Aktivkohle mit einem hohen Mikroporenvolumen und daraus resultierend einer hohen BET-Oberfläche von 1400 m²/g. In der Praxis zeigte es sich, dass hierbei eine störende Beladung von Elementarschwefel auf der Aktivkohle auftrat, wenn das zu reinigende Abgas neben SO₂ auch H₂S enthielt.

Die Erfindung liegt die Aufgabe zu Grunde, das bekannte Verfahren weiter zu entwickeln und dafür zu sorgen, dass sich die Aktivkohle nicht mit Elementarschwefel belädt. Erfindungsgemäß gelingt dies durch die im kennzeichnenden Teil des Patentanspruchs genannten Merkmale (Es bedeutet: nm = Nanometer = 10⁻⁹m). Üblicherweise ist die Beladung der Aktivkohle mit Elementarschwefel vernachlässigbar klein und liegt unterhalb von 0,1 Gew.-%.

Beim Verfahren der Erfindung bildet die Aktivkohle-Schüttung ein Festbett oder aber ein allmählich abwärts wanderndes Bett, wobei ein Teil der Schüttung abgezogen wird. Üblicherweise strömt das Abgas aufwärts durch die Schüttung oder das Bett, doch ist auch eine etwa horizontale oder abwärts gerichtete Durchströmung möglich.

Das Abgas, welches man der Schüttung zuführt, weist üblicherweise noch folgende Komponente auf:
- O₂: 3 bis 20 Volumenprozent,
- COS: 0 bis 0,1 Volumenprozent,
- CS₂: 0 bis 0,1 Volumenprozent und
- SO₃: 0 bis 0,2 Volumenprozent und üblicherweise weniger als 0,1 Volumenprozent.

In an sich bekannter Weise sorgt man dafür, dass das der Aktivkohle-Schüttung zugeführte Abgas staubarm ist und eine Staubgehalt von höchstens etwa 50 mg/Nm³ aufweist. Das Abgas kann trocken sein oder auch mehr oder weniger Wasserdampf bis zur relativen Sättigung von 100 % enthalten. Wenn man ein trockenes Abgas in die Schüttung leitet, wird das nötige Wasser der Schüttung durch Bedüsen zugeführt. Die Temperatur, mit welcher das Abgas in die Aktivkohle-Schüttung eintritt, liegt im Bereich von 10 - 200 °C und üblicherweise unterhalb von 140 °C. Es empfiehlt sich, das Abgas mit einer Geschwindigkeit von 0,1 bis 0,5 m/sec durch die Aktivkohle-Schüttung zu leiten.

Wenn das Abgas relativ viel Wasserdampf enthält und eine relative Wasserdampf-Sättigung von mindestens etwa 40 % aufweist, bildet sich auf der Aktivkohle Schwefelsäure, die schließlich von der Kohle nach unten abläuft. Bei trockenem Abgas oder als zusätzliche Maßnahme auch bei wasserdampfhaltigem Abgas wird man das Aktivkohle-Festbett von oben mit Wasser oder auch im Kreislauf geführter, mit Wasser verdünnter Schwefelsäure bedüsen. Hierbei ist es für das erfindungsgemäße Verfahren charakteristisch, dass die Sulfide ebenfalls zu Schwefelsäure oxidiert und mit der ablaufenden Säure abgeführt werden. Dies führt zu dem wichtigen Vorteil, dass keine oder praktisch keine Elementarschwefel-Beladung auf der Aktivkohle zurückbleibt. Bei bekannten Verfahren entsteht diese Schwefel-Beladung durch die Claus-Reaktion 2H₂S + SO₂ = 3S + 2H₂O.

Für das erfindungsgemäße Verfahren verwendet man eine Aktivkohle, die ein relativ kleines Mikroporenvolumen aufweist. Diese Aktivkohle kann z.B. auf Basis Steinkohle hergestellt werden.

Der Aktivkohle-Schüttung können Abgase zugeführt werden, die bei unterschiedlichen Bedingungen erzeugt wurden. Als Beispiel sei hier nur ein Abgas aus der Laugung von Erzen genannt, welches neben anderen Komponenten H₂S, SO₂ und SO₃ enthält. Ein solches Abgas entsteht zum Beispiel dadurch, daß Erz mit verdünnter Schwefelsäure verrührt wird, wobei ein Abgas abgezogen wird, welches die genannten Komponenten enthält und gereinigt werden muß. Bei bekannten Verfahren trat der Nachteil auf, daß sich die Aktivkohle mit Elementarschwefel beludt und deshalb nach einer gewissen Zeit ausgewechselt und regeneriert werden mußte. Durch das erfindungsgemäße Verfahren, bei welchem diese Beladung vermieden wird, entfällt somit auch die lästige Regenerierung.

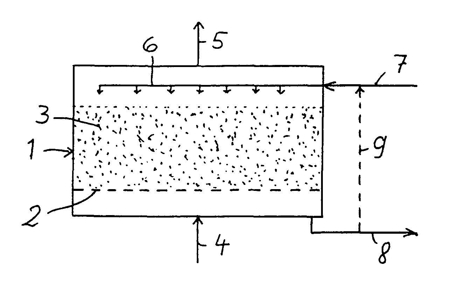

Die Zeichnung zeigt Varianten des Verfahrens in schematischer Darstellung.

In einem Behälter (1) befindet sich auf einem Rost (2) ein Festbett (3) der körnigen Aktivkohle, das vom zu reinigenden Abgas (4) aufwärts durchströmt wird. Das gereinigte Gas wird in der Leitung (5) abgezogen. Es gibt eine auf das Festbett gerichtete Bedüsung (6) mit Wasserzufuhr (7). Schwefelsäure wird in der Leitung (8) abgeführt, wobei ein Teilstrom durch die gestrichelt eingezeichnete Leitung (9) zur Bedüsung (6) zurückgeführt werden kann. Wenn das Abgas mit relativ hoher Temperatur in den Behälter (1) eintritt, wird es durch die Bedüsung mit Wasser oder verdünnter Schwefelsäure in vorteilhafter Weise im Festbett (3) gekühlt, so daß dort die Temperaturen zumindest im oberen Bereich des Bettes (3) zumeist nur höchstens 80°C betragen.

### Beispiel:

Im Labormaßstab wird mit einer Aktivkohle mit Korngrößenbereich 2 - 5 mm, BET - Oberfläche 1 000 m²/g, Mikroporenvolumen 0,4 cm³/g, Mesoporenvolumen 0,15 cm³/g und Makroporenvolumen 0,23 cm³/g gearbeitet. Die Aktivkohle befindet sich in einem senkrechten Rohr von 35 mm Innendurchmesser und bildet ein 100 cm hohes Festbett, das aufwärts vom Abgas durchströmt wird. Das Abgas kommt aus dem Aufschluß von titanhaltigem Erz mittels Schwefelsäure, es enthält 0,2 Vol.% SO₂, 0,05 Vol.% H₂S, 0,05 Vol.% COS und 15 Vol.% O₂. Das Abgas wird zunächst befeuchtet und auf eine relative Wasserdampf-Sättigung von 80% und eine Temperatur von 60°C eingestellt. Pro Stunde werden 600 N1 Abgas durch das Aktivkohle-Festbett geleitet, wobei das Bett von oben kontinuierlich mit 0,01 ℓ/h Wasser bedüst wird.

Das Reingas hat einen SO₂-Gehalt von weniger als 1 ppm und ebenso einen H₂S-Gehalt von weniger als 1 ppm, der COS-Gehalt liegt bei 40 ppm. 20 Stunden nach Beginn des Versuchs beginnt Schwefelsäure aus dem unteren Ende des Rohrs abzulaufen, die H₂SO₄-Konzentration liegt bei 32 Gew.%. Der Versuch wird unverändert weitere 85 Stunden lang fortgesetzt, ohne daß sich eine Veränderung der Beschaffenheit des Reingases ergibt. Danach wird auf der Aktivkohle eine Beladung mit Elementarschwefel von 0,04 Gew.%, bezogen auf das Gewicht der frischen Aktivkohle, festgestellt. Bei vollständiger Umsetzung von H₂S und SO₂ im Abgas nach der Clausreaktion (2H₂S+SO₂ = 3S + 2 H₂O) hätte unter den gegebenen Bedingungen 73 g Elementarschwefel entsprechend einer Beladung der Aktivkohle mit 15 Gew.% entstehen können. Bei bekannten Verfahren, bei denen auf der Aktivkohle erheblich mehr Elementarschwefel abgeschieden wird, geht die Reinigungswirkung der Aktivkohle schon nach kurzer Zeit zurück.
Abweichend vom beschriebenen Beispiel hätte man anstelle von Wasser auch mit der gleichen Menge an verdünnter Schwefelsäure (H₂SO₄-Gehalt = 10 Gew.-%) bedüsen können.

## Patentansprüche

1. Verfahren zum Reinigen eines Abgases, das O₂, 0,1 bis 2 Vol.-% SO₂ und 0,02 bis 1 Vol.-% H₂S enthält, wobei man das Abgas bei Temperaturen von 10 bis 200 °C durch eine Schüttung aus körniger Aktivkohle mit einer spezifischen Oberfläche nach BET von 700 bis 1200 m²/g leitet und dabei zusammen mit Wasser auf der Aktivkohle Schwefelsäure erzeugt, wobei die H₂SO₄-Konzentration auf den Aktivkohlekörnern 50 bis 80 Gew.-% beträgt und die Schwefelsäure von der Aktivkohle abfließt, **dadurch gekennzeichnet, dass** man ein O₂, SO₂ und H₂S enthaltendes Abgas reinigt, dass man die Aktivkohle-Schüttung mit Wasser oder Schwefelsäure bedüst, dass man eine Aktivkohle mit einem Mikroporenvolumen von 0,1 bis 0,5 cm³/g, einem Mesoporenvolumen von 0,07 bis 0,2 cm³/g und einem Makroporenvolumen von 0,2 bis 0,5 cm³/g verwendet, wobei die Mikroporen Durchmesser im Bereich von 0,2 bis 1 nm, die Mesoporen Durchmesser im Bereich von 1 bis 25 nm und die Makroporen Durchmesser größer 25 nm haben, und dass man auf der Aktivkohle eine Beladung an Elementarschwefel von höchstens 0,5 Gew.-% erzeugt.

## Claims

1. A process for purifying an exhaust gas which contains O₂, 0.1 to 2% by volume SO₂ and 0.02 to 1% by volume H₂S, wherein the exhaust gas is passed at temperatures from 10 to 200°C through a bed of granular activated carbon with a specific BET surface area of 700 to 1200 m²/g and in so doing sulphuric acid is produced on the activated carbon together with water, the H₂SO₄ concentration on the activated carbon grains being 50 to 80% by weight and the sulphuric acid flowing away from the activated carbon, **characterised in that** an exhaust gas containing O₂, H₂S and SO₂ is purified, that the activated carbon bed is sprinkled with water or sulphuric acid, that an activated carbon having a micropore volume of 0.1 to 0.5 cm³/g, a mesopore volume of 0.07 to 0.2 cm³/g and a macropore volume of 0.2 to 0.5 cm³/g is used, the micropores having diameters in the range from 0.2 to 1 nm, the mesopores diameters in the range from 1 to 25 nm and the macropores diameters greater than 25 nm, and that a loading of elemental sulphur of at most 0.5% by weight is produced on the activated carbon.

## Revendications

1. Procédé d'épuration d'un effluent gazeux, qui contient du O₂, de 0,1 à 2 % en volume de SO₂ et de 0,02 à 1 % en volume de H₂S, en envoyant l'effluent gazeux à des températures de 10 à 200°C à travers un tas de charbon actif en grains ayant une surface spécifique suivant BET de 700 à 1200 m²/g et en produisant ainsi ensemble avec de l'eau sur le charbon actif de l'acide sulfurique, la concentration en H₂SO₄ sur les grains de charbon actif étant de 50 à 80 % en poids et l'acide sulfurique s'écoulant du charbon actif, **caractérisé en ce que** l'on épure un effluent gazeux contenant O₂, H₂S et SO₂, **en ce que** l'on asperge le tas de charbon actif d'eau ou d'acide sulfurique, **en ce que** l'on utilise un charbon actif ayant un volume de pores microscopiques de 0,1 à 0,5 cm³/g, un volume de mésopores de 0,07 à 0,2 cm³/g et un volume de pores macroscopiques de 0,2 à 0,5 cm³/g, les pores microscopiques ayant des diamètres de l'ordre de 0,2 à 1 nm, les mésopores ayant des diamètres de l'ordre de 1 à 25 nm et les pores macroscopiques ayant des diamètres supérieurs à 25 nm et **en ce que** l'on produit sur le charbon actif une charge de soufre élémentaire de 0,5 % en poids au plus.
